(19) Europäisches Patentamt
European Patent Office
Office européen des brevets

(11) Veröffentlichungsnummer: **0 232 219**
**A1**

(12) # EUROPÄISCHE PATENTANMELDUNG

(21) Anmeldenummer: **87810025.4**

(22) Anmeldetag: **15.01.87**

(51) Int. Cl.³: **C 09 C 1/20**
C 09 C 1/34, C 09 C 1/08
C 09 C 3/08, C 08 K 3/24
C 08 K 9/04

(30) Priorität: **21.01.86 US 819970**

(43) Veröffentlichungstag der Anmeldung:
**12.08.87 Patentblatt 87/33**

(84) Benannte Vertragsstaaten:
**BE CH DE FR GB IT LI NL**

(71) Anmelder: **CIBA-GEIGY AG**
**Klybeckstrasse 141**
**CH-4002 Basel(CH)**

(72) Erfinder: **Ferrill, Richard M., Jr.**
**44 Sheridan Street**
**Glens Falls, N.Y. 12801(US)**

(54) **Mit Estern behandelte Metallchromat-Pigmente.**

(57) Metallchromat-Pigmentzusammensetzungen enthaltend 70 bis 99 Gew.% eines Metallchromat-Pigmentes und 1 bis 30 Gew.% eines Esters der Formel I

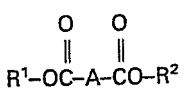

(I),

worin $R^1$ und $R^2$ unabhängig voneinander $C_1$-$C_{18}$-Alkyl und A $C_1$-$C_{18}$-Alkylen oder $C_2$-$C_{18}$-Alkenylen bedeuten.

Pigmentpräparate dieser Art zeichnen sich insbesondere durch eine ausgezeichnete Hitzebeständigkeit aus.

EP 0 232 219 A1

Croydon Printing Company Ltd.

0232219

CIBA-GEIGY AG
Basel (Schweiz)

3-15715/=/CGC 1174

# Mit Estern behandelte Metallchromat-Pigmente

Die vorliegende Erfindung betrifft eine Pigmentzusammensetzung enthaltend ein Metallchromat-Pigment und einen Dialkylester einer aliphatischen Dicarbonsäure, sowie ihre Verwendung zum Färben von hochmolekularem organischem Material.

Metallchromat-Pigmente finden schon lange breite Anwendung und sind in einer Vielzahl von verschiedenen Farbtönen erhältlich. Von den verschiedenen Metallchromat-Pigmenten, z.B. Strontiumchromat, Zinkchromat und Bleichromat ist letzteres das meist verwendete. Diese Chromat-Pigmente können verhältnismässig billig hergestellt werden und besitzen im allgemeinen gute Pigmenteigenschaften.

Die geringe Hitzebeständigkeit (Nachdunkeln beim Einarbeiten bei hohen Temperaturen in thermoplastische Kunstharze), sowie die ungenügende Stabilität gegen chemische Angriffe, charakteristische Nachteile der Bleichromat-Pigmente, können durch Ueberziehen der Pigmentteilchen mit wasserhaltigen Oxiden, wie Siliciumoxid oder Aluminiumoxid verbessert werden, wie dies z.B. aus dem US-Patent 3 370 971 bekannt ist. Eine Verbesserung hinsichtlich der Brüchigkeit und Zerreiblichkeit der überzogenen Metallchromat-Pigmente wird, wie in US-Patent 1 807 890 beschrieben ist, durch Behandlung mit einem Erdalkalisalz einer Harzsäure oder langkettigen Fettsäure erreicht.

Trotz der Verbesserung genügt die Hitzebeständigkeit der herkömmlichen Bleichromat-Pigmente nicht immer den hohen Anforderungen der Technik, insbesondere wenn die Verarbeitung der damit pigmentierten thermoplastischen Kunstharze ausserordentlich hohe Temperaturen

erfordert. Zusätzlich ist auch eine Verbessserung der Stabilität gegen chemische Angriffe, der Lichtbeständigkeit usw. in Lacken, Druckfarben und Kunststoffen erwünscht.

Eine weitere Methode zur Behandlung von Bleichromat-Pigmenten ist im US-Patent 4 115 143 beschrieben. Dabei werden die Pigmente mit einem organischen Ester ausgewählt aus den Estern der Phthalsäure, Terephthalsäure oder von Fettsäuren, wie z.B. Butylstearat behandelt. Die so erhaltenen Produkte werden als verhältnismässig hitzebeständig und staubfrei beschrieben. Gewisse Mängel treten allerdings auf, insbesondere bei Systemen, die ohne Silicatüberzug mit Estern behandelt werden oder wenn höhere Estermengen zur Behandlung nötig sind.

Auch andere Pigmente und Materialien werden mit Estern beschichet, um staubfreie Produkte zu erhalten. So beschreibt das US-Patent 3 649 321 die Beschichtung von Titandioxid mit aliphatischen Estern oder Diestern oder mit Trialkyl- oder Triarylphosphaten. Das US-Patent 3 928 060 beschreibt das Ueberziehen von Asbestfasern mit $C_1$-$C_6$-Carbnsäureestern. Aus US-Patent 3 973 982 ist es bekannt, Chromat-Pigmente mit aromatischen Carbonsäuren zu überziehen.

Gemäss US-Patent 4 247 338 werden Metallchromat-Pigmente mit bestimmten Metallsalzen von Fettsäuren und mit nicht flüchtigen Estern, unter anderem mit Diestern von Dicarbonsäuren und gesättigten einwertigen Alkoholen behandelt. Dabei erreicht man wohl eine Verbesserung der Eigenschaften; die zwingende Anwesenheit verschiedener weiterer Additive wirkt sich jedoch nachteilig aus.

Es ist nun gefunden worden, dass durch Behandlung von Metallchromat-Pigmenten, insbesondere Bleichchromaten mit einem Dialkylester einer aliphatischen Dicarbonsäure, Produkte mit überraschend besseren Beständigkeiten, insbesondere gegen Hitze und starken Scherkräften erhalten werden. Aber auch die Beständigkeit gegen chemische

Angriffe, die Lichtbeständigkeit, die Farbstärke und die Reinheit des Farbtones werden verbessert. Durch diese Behandlung erhalten die Produkte eine grössere Anwendungsflexibilität.

Die vorliegende Erfindung betrifft demnach Metallchromat-Pigmentzusammensetzungen enthaltend 70 bis 99 Gew.% eines Metallchromat-Pigmentes und 1 bis 30 Gew.% eines Esters der Formel I

$$R^1-O\overset{O}{\overset{\|}{C}}-A-\overset{O}{\overset{\|}{C}}O-R^2 \qquad (I),$$

worin $R^1$ und $R^2$ unabhängig voneinander $C_1$-$C_{18}$-Alkyl und A $C_1$-$C_{18}$-Alkylen oder $C_2$-$C_{18}$-Alkenylen bedeuten.

$R^1$ und $R^2$ als $C_1$-$C_{18}$-Alkyl bedeuten z.B. Methyl, Ethyl, n-Propyl, Isopropyl, n-Butyl, sec.-Butyl, n-Pentyl, n-Hexyl, n-Octyl, 1,1,3,3-Tetramethyl-butyl, n-Nonyl, Decyl, Dodecyl, Tetradecyl, Hexadecyl oder Octadecyl.

Stellt A Alkylen dar, so handelt es sich z.B. um Methylen, Ethylen, Propylen, Trimethylen, Tetramethylen, Pentamethylen, Hexamethylen, Heptamethylen, Octamethylen, Decamethylen oder Octadecamethylen.

Stellt A Alkenylen dar, so handelt es sich insbesondere um Vinylen.

Die ganze Gamme von Metallchromat-Pigmenten, die unbeschichteten, sowie die mit Siliciumoxid oder Silicium-/Aluminiumoxid beschichteten, können der erfindungsgemässen Behandlung unterworfen werden. Die Einarbeitung des Esters kann sowohl in einem trockenen wie in einem nassen Prozess erfolgen. Merkliche Eigenschaftsverbesserungen werden in verschiedenen Kunststoff- und Lack-Zusammensetzungen erreicht, vor allem jedoch in thermoplastischen Kunststoffen, wie z.B. Acrylnitril-Butadien-Styrol-Harze.

Obwohl die Erfindung hauptsächlich Metallchromat-Pigmente und insbesondere Bleichromate betrifft, eignet sich die oben definierte Esterbehandlung auch für eine Vielzahl von anderen anorganischen und organischen Pigmenten.

In den bevorzugten erfindungsgemässen Pigmentzusammensetzungen sind unbeschichtete Bleichromat-Pigmente sowohl als auch Bleichromat-Pigmente, die der bekannten Nachbehandlung mit wasserhaltigen Oxiden, wie Siliciumoxid und Aluminiumoxid, gemäss US-Patent 3 370 971, unterzogen wurden, enthalten. Bleichromat-Pigmente sind wegen ihrer breiten industriellen Anwendbarkeit und wegen ihrer ausgezeichneten Farbstärke bevorzugt. Die bevorzugten Bleichromat-Pigmente sind in einer Vielzahl von verschiedenen Farbtönen erhältlich. Auf der einen Seite gibt es das grünstichige "Primrose Yellow" in der rhombischen Kristallform. Ein verhältnismässig reines Bleichromat in monoklinischer Kristallform zeigt eine stärkere Rottönung und ist im allgemeinen als "Medium Yellow" bekannt. Zwischenfarbtöne werden bei festen Lösungen von Bleichromat und Bleisulfit, die im allgemeinen in monoklinischer Kristallform auftreten, erhalten. Auf der anderen Seite gibt es eine Reihe von festen Lösungen von Bleichromat, Bleisulfat und Bleimolybdat, die orange oder sogar gelblichrote, im allgemeinen als "Molybdatorange" oder "Molybdatrot" bekannte Farbtöne zeigen.

Unter den Estern der Formel I sind diejenigen bevorzugt, worin $R^1$ und $R^2$ unabhängig voneinander $C_1$-$C_8$-Alkyl bedeuten und A $C_1$-$C_8$-Alkylen oder $C_2$-$C_8$-Alkenylen, aber bevorzugt eine Gruppe $-(CH_2)_n-$ ist, worin n die Zahlen 4, 7 oder 8 bedeutet. Besonders geeignete Ester sind Glutar-, Adipin-, Azelain-, Sebacin- und Maleinsäureester und insbesondere Adipinsäuredibutyl-, Adipinsäure-di-(2-ethylhexyl)-, Azelainsäure-dibutyl-, Azelainsäure-di-(2-ethylhexyl)-, Sebacinsäure-dibutyl-, Sebacinsäure-dioctyl- und Sebacinsäure-didecylester.

Bevorzugt wird Adipinsäure-di-(2-ethylhexyl)-ester.

Ein weiterer Gegenstand der Erfindung ist das Verfahren zur Herstellung der obengenannten Metallchromat-Pigmentzusammensetzungen durch inniges Vermischen von 70 bis 99 Gew.% eines Metallchromat-Pigments mit 1 bis 30 Gew.% eines Esters der Formel I.

Die Ester werden zweckmässig im flüssigen Zustand eingesetzt. Unter Normalbedingungen feste Ester können in einem geeigneten organischen Lösungsmittel, wie Aceton oder Ethanol, gelöst Verwendung finden. Die Ester sollten einen genügend niedrigen Dampfdruck haben, dmait sie beim Trocknen des Pigments bei etwa 120°C nicht in bedeutendem Masse entweichen. Da Kunststoffzusammensetzungen, welche erfindungsgemäss behandelte Pigmentzusammensetzungen enthalten, in Spritzgussverfahren bei Temperaturen bis zu 300°C eingesetzt werden können, sollten die erfindungsgemäss einzusetzenden Ester einen genügend niedrigen Dampfdruck haben, um auch bei solchen Temperaturen beständig zu sein.

Die einzusetzende Menge an Ester variiert je nach Ester und je nach Anwendung des Pigmentes. Zweckmässig sind, wie erwähnt, Konzentrationen von 1 bis 30, bevorzugt jedoch von 5 bis 20 Gew.% Ester, bezogen auf die gesamte Pigmentzusammensetzung. Eher hohe Mengen an Ester können beispielsweise dann eingesetzt werden,wenn das Pigment zum Färben von Kunststoffen dient und demzufolge in kleineren Mengen im Substrat vorliegt.

Die Behandlung des Pigments mit dem Ester kann nach verschiedenen Methoden erfolgen. Bedingung zur Erlangung guter Resultate ist aber ein inniger Kontakt zwischen Pigment und Ester. Wie bereits erwähnt kann sowohl nass wie auch trocken behandelt werden; die nasse Behandlung ist aber bevorzugt. Im allgemeinen wird eine Mischung des Metallchromatpigmentes in einem wässrigen Medium innig mit mindestens einem Ester in Berührung gebracht. Die relativen Mengen an Pigment und Wasser können so sein, dass die Mischung in Form einer wässrigen Pigmentaufschlämmung vorliegt; dazu kann die Mischung 1 bis 35 Gew.% Pigment, bezogen auf die Mischung, und 65 bis 99 Gew.% Wasser, ebenfalls bezogen auf die Mischung, enthalten.

Die Mischung kann auch in Form eines wässrigen Presskuchens vorliegen, der normalerweise erhalten wird, wenn das Metallchromat-Pigment durch Filtrieren aus dem wässrigen Medium, in welchem es hergestellt wurde, isoliert wird. Im Fall eines Presskuchens kann die Mischung 25 bis 80 Gew.% Metallchromat-Pigment und 20 bis 75 Gew.% Wasser, jeweils bezogen auf die Mischung, enthalten. Der erforderliche innige Kontakt entsteht leicht und wirksam, wenn man die Pigment/Wasser-Mischung und den Ester schüttelt, rührt oder emulgiert. Uebliche Vorrichtungen für einen solchen Kontakt umfassen übliche Mischer und allgemein Behälter, die mit hoch-tourigen Rührern versehen sind. Der innige Kontakt kann auch durch Mahlung der feuchten Mischung von Pigment und Ester erleichtert werden. Der Ester kann mit der Pigment/Wasser-Mischung per se in Berührung gebracht werden, oder er kann vor der Berührung mit derselben zuerst in Wasser emulgiert werden. Das letztgenannte Verfahren wird bevorzugt, da es eine homogene Verteilung des Esters im gesamten Metallchromat-Pigment sicherstellt. Alle üblichen oberflächenaktiven Mittel, kationaktive, anionaktive, nichtionogene, sowie amphotere können mit Erfolg eingesetzt werden.

Obwohl die Temperatur der Berührung nicht besonders kritisch ist, leigt sie vorzugsweise zwischen 60 und 95°C, um eine vollständige Assoziierung des Esters mit dem Metallchromat-Pigment zu gewährleisten. Dieser Temperaturbereich wird auch der Einfachheit halber bevorzugt, weil die wässrigen Pigmentaufschlämmungen, in welchen Metallchromatpigmente hergestellt werden, vor der Isolierung des Pigmentes gewöhnlich in diesem Temperaturbereich liegen. Daher kann die Pigmentaufschlämmung ohne vorherige Isolierung des Pigmentes aus der Syntheseaufschlämmung direkt zur Herstellung der erfindungsgemässen Metallchromat-Pigmentzusammensetzung verwendet werden.

Wie bereits erwähnt, kann die Metallchromat-Pigmentzusammensetzung direkt aus einer Syntheseaufschlämmung des Grund- oder nicht überzogenen Pigmentes oder eines mit wasserhaltigen Oxiden, z.B. Siliciumoxid und Aluminiumoxid gemäss US-Patent 3 370 971, überzogenen Pigmentes hergestellt werden. Die Pigmentpartikel können

demnach mit einem oder mehreren wasserhaltigen anorganischen Oxiden überzogen, gewaschen und anschliessend mit dem Ester behandelt werden. Die als $SiO_2$ berechnete Menge Siliciumoxid kann zwischen 2 und 40 Gew.% variieren, während der Aluminiumoxidüberzug 0,2 bis 10 Gew.% ausmachen kann. Ein Hauptfaktor, der den Punkt während der Pigmentverarbeitung bestimmt, an welchem die Bildung des Pigmentpräparates zweckmässig ist, ist der Punkt, an welchem das Pigment in trockenem Zustand gehandhabt wird und die Staubbekämpfung ein Problem wird. Wird z.B. das Grund- oder nicht überzogene Pigment aus der Syntheseaufschlämmung isoliert und vor Aufbringung eines Ueberzuges, wie oben beschrieben, getrocknet, dann sollte das Pigmentpräparat zweckmässig vor dem Trocknen und der anschliessenden Aufbringung des Ueberzuges gebildet werden. Das erfindungsgemässe Verfahren stört die anschliessende Aufbringung eines Ueberzuges oder andere übliche Nachbehandlungen nicht. Zur sicheren Staubkontrolle nach der weiteren Verarbeitung des Pigmentes, z.B. der Aufbringung eines Ueberzuges, wird das weiterverarbeitete oder überzogene Pigment vorzugsweise erneut mit Wasser gemischt und innig mit einem Ester gemäss der vorliegenden Erfindung in Berührung gebracht.

Die Metallchromat-Pigmentzusammensetzung, in welcher Pigment und Ester vermutlich zusammenhängende Einzelpartikel des Gemsiches bilden, kann in üblicher Weise aus der wässrigen Aufschlämmung isoliert werden. So kann die Aufschlämmung z.B. - notwendigenfalls mit Ausflockungsmitteln, wie Aluminiumsulfat - ausgeflockt, filtriert, mit Wasser gewaschen und bei Zimmertemperatur oder erhöhten Temperaturen getrocknet werden.

Zur Herstellung der erfindungsgemässen Metallchromat-Pigmentzusammensetzungen im trockenen Zustand wird ein trockenes Gemisch von Pigment und Ester zur Bewerkstelligung des nötigen innigen Kontaktes und der homogenen Verteilung in für Pigmente allgemein üblichen Mahlvorrichtungen vermahlen.

Wie übliche Metallchromatpigmente ist auch die erfindungsgemässe Metallchromat-Pigmentzusammensetzung als Pigment zum Färben von hochmolekularem organischen Material sehr vielseitig einsetzbar. Die Pigmentzusammensetzung kann z.B. direkt in Kunststoffe oder Lacke sowie in Farben auf Oel- oder Wassergrundlage in üblicher Weise einverleibt werden, um diesen Farbe zu verleihen.

Werden die erfindungsgemässen Metallchromat-Pigmentzusammensetzungen aus einem mit wasserhaltigen Oxiden überzogenem Metallchromat hergestellt, so sind sie ganz besonders zum Färben von thermoplastischen Kunstoffen geeignet, da sie eine ausgezeichnete Hitzebeständigkeit zeigen, d.h. Stabilität gegen Nachdunkeln bei den hohen Verarbeitungstemperaturen, und da sie mit thermoplastischen Kunststoffen keine Reaktion eingehen, d.h. keine Oxydation desselben bewirken. Die Vorteile dieser Erfindung erstrecken sich auf die verschiedensten thermoplastischen Kunststoffe, wie Polyethylen, Polypropylen, Polyamide, Acetal-Harze, Polyester, Polyvinylfluorid und ABS. Die besten Effekte erhält man in ABS.

Die erfindungsgemässen Metallchromat-Pigmentzusammensetzungen zeichnen sich also durch erhöhte Hitzestabilität und physikalische Eigenschaften, ohne Einbusse ihrer ausgezeichneten Pigmenteigenschaften. Die Vielseitigkeit ihrer Anwendung wird dadurch auch gesteigert. Zudem sind noch weitere Eigenschaften, wie z.B. Beständigkeit gegen chemische Angriffe, Lichtbeständigkeit und Farbstärke, verbessert.

Die folgenden Beispiele veranschaulichen die vorliegende Erfindung, ohne sie zu beschränken.

<u>Beispiel 1:</u> a) Das Ausgangsprodukt ist ein handelsübliches monoklinisches Bleichromat-Pigment vom "Medium Yellow"-Typ (C.I. 77600). Das Pigment wird gemäss der im US-Patent 3 370 971 beschriebenen Methode mit Siliciumoxid und Aluminiumoxid überzogen, so dass es

nach dem Trocknen 20,8 Gew.% Siliciumoxid enthält. 237,8 g dieses Produktes in Presskuchenform, mit 120,0 g Feststoffgehalt werden mit 1507 ml Wasser aufgeschlämmt und unter Rühren auf 90°C geheizt.

b) 1,8 Isopropylaminsalz von Dodecylbenzolsulfonsäure werden zu 18,0 g Adipinsäure-di-(2-ethylhexyl)-ester gegeben und unter Rühren gelöst. Diese Lösung wird in 117 ml Wasser bei 60°C untergerührt und durch einen Homogenisator (Gaulin) unter einem Druck von 310,26 bar (4500 psi) geschickt, gefolgt von genügend Wasser, um den Ester vollständig aus dem Homogenisator herauszuwaschen. Die erhaltene Emulsion wird innert zwei Minuten in die gemäss a) erhaltene Pigmentaufschlämmung gegeben, gefolgt von 7,3 g handelsüblichem Aluminiumsulfat ($Al_2(SO_4)_3 \cdot 16H_2O$) als Flockulationsmittel. Das Gemisch wird 15 Minuten gerührt, abgenutscht, 5 Mal mit 500 ml Wasser bei 25°C gewaschen. Der Presskuchen wird bei 82°C getrocknet und in einer Hammermühle, unter Verwendung eines 1,59 mm-Siebs (1/16") vermahlen. Das erhaltene Produkt, welches 13,0 Gew.% Adipinsäureester enthält, ist annähernd staubfrei und besitzt eine ausgezeichnete Farbstärke.

In ABS eingearbeitet und nach Spritzguss bei 288°C ergibt die so erhaltene Pigmentzusammensetzung im Vergleich zu dem nur mit Silcium- und Aluminiumoxid überzogenen Pigment eine reinere und in der Farbstärke unveränderte Ausfärbung.

Beispiel 2: Ersetzt man in Beispiel 1 Adipinsäure-di-(2-ethylhexyl)-ester mit der äquivalenten Menge Azelainsäure-dibutyl-ester, so erhält man eine Pigmentzusammensetzung mit gleich guten Eigenschaften.

Beispiel 3: 300,0 g desselbem Medium-Yellow-Pigments wie in Beispiel 1, werden in der gleichen Weise mit Silicium- und Aluminiumoxid überzogen und aufgeschlämmt, wie in Beispiel 1a) beschrieben. Die Aufschlämmung wird dann auf pH 6,0 eingestellt und auf 90-95°C geheizt. Zugleich wird in gleicher Weise wie unter Beispiel 1b) beschrieben, aber mit entsprechenden Mengen, eine wässrige Emulsion

enthaltend 45,0 g Adipinsäure-di-(2-ethylhexyl)-ester hergestellt. Diese Emulsion wird danach innert zwei Minuten der Pigmentaufschlämmung zugegeben, gefolgt von 18,25 g handelsüblichem Aluminiumsulfat. Das Gemisch wird 30 Minuten gerührt, filtriert und 5 Mal mit 500 ml Wasser bei 25°C gewaschen. Der Presskuchen wird bei 79°C getrocknet und in einer Hammermühle, unter Verwendung eines 1,59 mm-Siebs (1/16") vermahlen.

In ABS eingearbeitet und nach Spritzguss bei 288°C ergibt die so erhaltene Pigmentzusammensetzung im Vergleich zu dem nur mit Silicium- und Aluminiumxoid überzogene Pigment eine reinere und in der Farbstärke unveränderte Ausfärbung.

Beispiel 4: Beispiel 3 wird wiederholt, mit der einzigen Ausnahme, dass die wässrige Emulsion des Adipinsäure-di-(2-ethylhexyl)-esters auf 90°C aufgeheizt und inneret 15 Minuten der Pigmentaufschlämmung zugegeben wird. Man erhält eine Pigmentzusammensetzung mit gleich guten Eigenschaften wie die des Beispiels 3.

Beispiel 5: Beispiel 4 wird wiederholt, mit der einzigen Ausnahme, dass das Endprodukt in einer Hammermühle , unter Verwendung eines 0,4 mm-Siebs (1/64") vermahlen wird.

In ABS eingearbeitet und nach Spritzguss bei 315°C ergibt die so erhaltene Pigmentzusammensetzung die gleich guten, im Vergleich zu nur mit Silicium- und Aluminiumoxid überzogenem Pigment überlegenen Eigenschaften, wie die Pigmentzusammensetzungen von Beispiel 4.

Beispiel 6: Beispiel 3 wird wiederholt, mit der Ausnahme, dass anstelle des Medium-Yellow-Pigmentes ein handelsübliches Molybdat-Orange-Pigment (C.I. 77605) verwendet wird, dass die Emulsion innert 3 Minuten der Pigmentaufschlämmung zugegeben wird, und dass das Endprodukt in einer Hammermühle , unter Verwendung eines 0,4 mm-Siebs (1/64") vermahlen wird.

In ABS eingearbeitet und nach Spritzguss bei 315°C ergibt die so erhaltene Pigmentzusammensetzung die gleich guten, im Vergleich zu nur mit Silicium- und Aluminiumoxid überzogenem Pigment überlegenen Eigenschaften, wie die Pigmentzusammensetzung von Beispiel 3.

Beispiel 7: Beispiel 3 wird wiederholt, mit der Ausnahme, dass statt 45,0 g 56,25 g Adipinsäure-di-(2-ethylhexyl)-ester eingesetzt werden und, dass die Emulsion auf 90°C aufgezeigt und innert 3 Minuten der Pigmentaufschlämmung zugeben wird.

In ABS eingearbeitet und nach Spritzguss bei 315°C ergibt die so erhaltene Pigmentzusammensetzung die gleich guten, im Vergleich zu nur mit Silicium- und Aluminiumoxid überzogenem Pigment überlegenen Eigenschaften, wie die Pigmentzusammensetzung von Beispiel 3.

Patentansprüche

1. Metallchromat-Pigmentzusammensetzungen enthaltend 70 bis 99 Gew.% eines Metallchromat-Pigmentes und 1 bis 30 Gew.% eines Esters der Formel I

$$R^1-O\overset{\overset{O}{\|}}{C}-A-\overset{\overset{O}{\|}}{C}O-R^2 \qquad (I),$$

worin $R^1$ und $R^2$ unabhängig voneinander $C_1$-$C_{18}$-Alkyl und A $C_1$-$C_{18}$-Alkylen oder $C_2$-$C_{18}$-Alkenylen bedeuten.

2. Metallchromat-Pigmentzusammensetzungen gemäss Anspruch 1, dadurch gekennzeichnet, dass das Metallchromat Bleichromat ist.

3. Metallchromat-Pigmentzusammensetzungen gemäss Anspruch 1, dadurch gekennzeichnet, dass im Ester der Formel I $R^1$ und $R^2$ unabhängig voneinander $C_1$-$C_8$-Alkyl bedeuten.

4. Metallchromat-Pigmentzusammensetzungen gemäss Anspruch 1, dadurch gekennzeichnet, dass im Ester der Formel I A eine Gruppe $-(CH_2)_n-$ ist, worin n die Zahlen 4, 7 oder 8 bedeutet.

5. Metallchromat-Pigmentzusammensetzungen gemäss Anspruch 1, dadurch gekennzeichnet, dass der Ester der Formel I Adipinsäure-di-(2-ethylhexyl)-ester ist.

6. Metallchromat-Pigmentzusammensetzungen gemäss Anspruch 1, dadurch gekennzeichnet, dass das Metallchromat-Pigment mit einem Silciumoxidüberzug beschichtet ist.

7. Metallchromat-Pigmentzusammensetzungen gemäss Anspruch 1, dadurch gekennzeichnet, dass das Metallchromat-Pigment mit einem Silicium- und Aluminiumoxidüberzug beschichtet ist.

8. Bleichromat-Pigmentzusammensetzungen gemäss Anspruch 2, dadurch gekennzeichnet, dass sie 80 bis 95 Gew.% mit Silicium- und Aluminiumoxid überzogenem Bleichromat-Pigment und 5 bis 20 Gew.% Adipinsäure-di-(2-ethylhexyl)-ester enthält.

9. Verfahren zur Herstellung von Metallchromat-Pigmentzusammensetzungen gemäss Anspruch 1, durch inniges Vermischen von 70 bis 99 Gew.% eines Metallchromat-Pigmentes und 1 bis 30 Gew.% eines Esters der Formel I

$$R^1-O\overset{O}{\overset{\|}{C}}-A-\overset{O}{\overset{\|}{C}}O-R^2 \qquad (I),$$

worin $R^1$ und $R^2$ unabhängig voneinander $C_1$-$C_{18}$-Alkyl und A $C_1$-$C_{18}$-Alkylen oder $C_2$-$C_{18}$-Alkenylen bedeuten.

10. Verfahren gemäss Anspruch 9, dadurch gekennzeichnet, dass sowohl das Pigment wie auch der Ester in einem wässrigen Medium vorliegen.

11. Verfahren gemäss Anspruch 9, dadurch gekennzeichnet, dass das Pigment mit einem Silicium- und Aluminiumoxidüberzug beschichtet ist.

12. Verfahren gemäss Anspruch 9, dadurch gekennzeichnet, dass der Ester Adipinsäure-di-(2-ethylhexyl)-ester ist.

13. Stoffzusammensetzung enthaltend hochmolekulares organisches Material und eine zum Pigmentieren genügende Menge der Metallchromat-Pigmentzusammensetzung gemäss Anspruch 1.

14. Stoffzusammensetzung gemäss Anspruch 13, dadurch gekennzeichnet, dass das hochmolekulare organische Material ein Kunststoff ist.

15. Stoffzusammensetzung gemäss Anspruch 13, dadurch gekennzeichnet, dass das hochmolekulare organische Material ein thermoplastischer Kunststoff ist.

16. Stoffzusammensetzung gemäss Anspruch 13, dadurch gekennzeichnet, dass das hochmolekulare organische Material ein Acrylnitril-butadien-styrol-Harz ist.

17. Stoffzusammensetzung gemäss Anspruch 13, dadurch gekennzeichnet, dass das hochmolekulare organische Material ein Lack ist.

FO 7.3/BUE/sm*

Europäisches Patentamt

**0232219**

Nummer der Anmeldung

# EUROPÄISCHER RECHERCHENBERICHT

EP 87 81 0025

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | EP-A-0 011 607 (CIBA-GEIGY)<br>* Seite 9, Zeilen 1-18; Patentansprüche 1,2,5,6 * | 1,2,6, 7,14 | C 09 C 1/20<br>C 09 C 1/34<br>C 09 C 1/08<br>C 09 C 3/08<br>C 08 K 3/24<br>C 08 K 9/04 |
| X | EP-A-0 075 682 (DR. SCHUMACHER GmbH)<br>* Patentansprüche 1,4 * | 1 | |
| X | DE-A-1 467 461 (LAPORTE TITANIUM)<br>* Seite 7, Zeilen 14-19; Patentansprüche 1,2,22 * | 1,2,17 | |
| | | | **RECHERCHIERTE SACHGEBIETE (Int. Cl.4)** |
| | | | C 09 C<br>C 08 K<br>C 09 D |

*Der vorliegende Recherchenbericht wurde für alle Patentansprüche erstellt.*

| Recherchenort | Abschlußdatum der Recherche | Prüfer |
|---|---|---|
| DEN HAAG | 04-05-1987 | VAN BELLINGEN I.C.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : *technologischer Hintergrund*
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82